# EUROPÄISCHE PATENTSCHRIFT

(11) **EP 3 688 511 B1**
(45) Veröffentlichungstag und Bekanntmachung des Hinweises auf die Patenterteilung: **10.11.2021**
(21) Anmeldenummer: 18778421.0
(22) Anmeldetag: 20.09.2018
(51) Int. Cl.: G02B 27/00, G02B 27/01

(54) **ANZEIGEVORRICHTUNG, INSBESONDERE FÜR EIN FAHRZEUG, SOWIE FAHRZEUG MIT EINER SOLCHEN ANZEIGEVORRICHTUNG**
DISPLAY DEVICE, IN PARTICULAR FOR A VEHICLE, AND VEHICLE HAVING A DISPLAY DEVICE OF THIS KIND
SYSTÈME D'AFFICHAGE DESTINÉ EN PARTICULIER À UN VÉHICULE, ET VÉHICULE MUNI DUDIT SYSTÈME D'AFFICHAGE

(30) Priorität: 27.09.2017 DE 102017217193
(43) Veröffentlichungstag der Anmeldung: 05.08.2020
(60) Teilanmeldung: 21200628.2
(73) Patentinhaber: Audi AG, 85045 Ingolstadt (DE)
(72) Erfinder: SCHWARTZE, Sebastian, 85049 Ingolstadt (DE); KLUG, Markus, 85057 Ingolstadt (DE); SCHWAGER, André, 38871 Ilsenburg (DE); KEZZE, Muhammad Ali, 52068 Aachen (DE)
(86) Internationale Anmeldenummer: PCT/EP2018/075496
(87) Internationale Veröffentlichungsnummer: WO 2019/063415

(56) Entgegenhaltungen:
- WO-A1-2010/057219
- WO-A1-2015/012280
- DE-A1-102011 083 662
- US-B2- 9 651 368

## Beschreibung

Die Erfindung betrifft eine Anzeigevorrichtung, insbesondere für ein Fahrzeug, gemäß dem Oberbegriff des Patentanspruchs 1. Ferner betrifft die Erfindung ein Fahrzeug mit einer solchen Anzeigevorrichtung.

Heutige Fahrzeuge weisen eine große Anzahl an Zusatzfunktionen auf, wodurch ein Fahrer schnell einen Überblick verlieren kann und dadurch seine Konzentration bezüglich des Straßenverkehrs geringer werden kann. Darüber hinaus werden Multimediafunktionen, welche insbesondere in einem Stand des Fahrzeugs zu benutzen sind, immer wichtiger. Darüber hinaus ist für die in heutigen Fahrzeugen verbauten Fahrerassistenzsysteme eine Umfelderfassung für ein korrektes Funktionieren des jeweiligen Fahrerassistenzsystems ausschlaggebend.

Um dem Fahrer Informationen einen Zustand des Fahrzeugs und die Zusatzfunktionen betreffend, möglichst gut nahezubringen, sind aktuelle Fahrzeuge teilweise mit einem sogenannten Head-up-Display (HUD) ausgestattet, welches es einem Fahrer des Fahrzeugs ermöglicht, seine Blickrichtung beizubehalten und Informationen einen Zustand des Fahrzeugs betreffend, wie beispielsweise die Geschwindigkeit, direkt in sein Sichtfeld projiziert zu bekommen. Dadurch muss der Fahrer des Fahrzeugs seinem Blick nicht von der Fahrbahn abwenden, was beispielsweise eine Verkehrssicherheit erhöhen kann.

Die DE 10 2011 083 662 A1 zeigt eine Anzeigevorrichtung für Insassen eines Fahrzeugs, wobei die Anzeigevorrichtung eine holographische Projektionsfläche aufweist, welche im eingebauten Zustand der Anzeigevorrichtung aus Sicht der Insassen transparent ausgeführt ist und Licht, welches aus einem Lichtleiter ausgekoppelt wird verwendet, um eine Anzeige für die Insassen zu generieren.

Die DE 10 2013 210 887 A1 zeigt eine optische Sensoranordnung für ein Fahrzeug, wobei die optische Sensoranordnung eine Sensoreinrichtung zur Aufnahme optischer Strahlung aus einem Fahrzeugumfeld und mindestens ein optisches Element aufweist, wobei das optische Element in einem Strahlengang der Sensoreinrichtung angeordnet ist und mit der Sensoreinrichtung ein Abbildungssystem, zur Abbildung der optischen Strahlung auf die Sensoreinrichtung, ausbildet.

Ferner zeigt die DE 10 2014 204 691 A1 eine Bildaufnahmevorrichtung, insbesondere zur Fahrzeugvermessung, mit wenigstens einem Bildsensor, der zur Aufnahme von Bildern aus einer Bildaufnahmerichtung ausgebildet ist, aufweisend wenigstens eine Lichtquelle und wenigstens ein Lichtumlenkelement, dass derart ausgebildet und angeordnet ist, dass es einen von der Lichtquelle ausgehenden Lichtstrahl derart umlenkt, dass der Lichtstrahl koaxial zur Bildaufnahmerichtung aus der Bildaufnahmevorrichtung austritt.

Die Dokumente US9651368 und WO2015012280 zeigen weitere Anzeigevorrichtungen.

Nachteil des Stands der Technik sind, beispielsweise der benötigte Bauraum und eine stark begrenzter jeweiliger Einsatzbereich.

Aufgabe der vorliegenden Erfindung ist es, eine Anzeigevorrichtung und ein Fahrzeug zu schaffen, sodass eine besonders vorteilhafte Funktionalität geschaffen werden kann.

Diese Aufgabe wird durch eine Anzeigevorrichtung mit den Merkmalen des Patentanspruchs 1 sowie durch ein Fahrzeug mit den Merkmalen des Patentanspruchs 10 gelöst. Vorteilhafte Weiterbildungen der Erfindung sind durch die abhängigen Patentansprüche, die folgende Beschreibung sowie die Figuren beschrieben.

Durch die Erfindung wird eine Anzeigevorrichtung, insbesondere für ein Fahrzeug, bereitgestellt, welche wenigstens eine Scheibe mit wenigstens einem zumindest innerhalb eines transparenten Teilbereichs der Scheibe angeordneten Volumenhologramm und wenigstens eine Lichtquelle, mittels welcher in das Volumenhologramm Licht einkoppelbar ist, aufweist. Aus dem von der Lichtquelle bereitgestelltem Licht ist mittels des Volumenhologramms wenigstens ein für einen menschlichen Betrachter räumlich erscheinendes Bild erzeugbar.

Um nun die Anzeigevorrichtung mit einer besonders vorteilhaften Funktionalität betreiben zu können, weist die erfindungsgemäße Anzeigevorrichtung wenigstens eine zumindest einen lichtempfindlichen Bildsensor aufweisende Kameravorrichtung auf, deren Optik, über welche mittels des Bildsensors Bilder erfassbar sind, zumindest teilweise durch den Teilbereich gebildet ist.

Ein erfasstes beziehungsweise erfassbares Bild wird auch als Aufnahmebild oder Erfassungsbild bezeichnet. Das Erfassen des Bildes wird auch als Aufnehmen des Bildes bezeichnet, worunter zu verstehen ist, dass das Bild mittels des Bildsensors erfasst wird. Das erzeugbare Bild wird, wenn es erzeugt wird, angezeigt und ist somit ein erzeugtes und somit angezeigtes Bild. Das wenigstens eine angezeigte beziehungsweise erzeugbare oder erzeugte Bild wird auch als Anzeigebild bezeichnet. Dabei wird der Teilbereiches, welcher zumindest teilweise die Optik bildet, auch als Erfassungsbereich beziehungsweise Aufnahmeebene bezeichnet. Als Optik ist der Teil der Kameravorrichtung zu verstehen, welcher auch als Objektiv bezeichnet werden kann und Licht derart sammelt, dass eine, insbesondere reelle, optische Abbildung eines Bildmotivs mittels des Erfassungsbilds erzeugt werden kann. Dabei charakterisiert insbesondere das an dem Teilbereich angeordnete Volumenhologramm die Optik der Kameravorrichtung.

Das Volumenhologramm ist beispielsweise derart in der Schiebe angeordnet, dass es zwischen einem ersten Teil der Scheibe und einem zweiten Teil liegt, insbesondere ist es zwischen zwei Schichten der Scheibe eingebettet und bildet zusammen mit den Schichten einen Wellenleiter aus. Dieser Wellenleiter wird auch als holographischer Waveguide bezeichnet und ist beispielsweise derart ausgebildet, dass er Licht zumindest einer bestimmter Wellenlänge oder eines bestimmten Wellenlängenbereichs innerhalb seines Volumens führen kann. Das Führen des Lichts im Wellenleiter geschieht analog zu dem Führen von Licht in einem Lichtleiter mittels Totalreflexion. Der Teilbereich, welcher mittels der Optik die sogenannte Aufnahmeebene ausbildet, ist zumindest für den Wellenlängenbereich des Lichts, welcher nicht im Wellenleiter führbar ist, für den Betrachter transparent. Unter transparent ist zu verstehen, dass eine Gegenstand, wie beispielsweise die Scheibe oder deren Teilbereich, zumindest für einen großen Teil des sichtbaren Lichts beziehungsweise des Spektrums des sichtbaren Lichts durchsichtig erscheint, beziehungsweise Transmission von Licht durch den Gegenstand für einen großen Teil des sichtbaren Spektrums möglich ist. Damit die Scheibe möglichst transparent ausgebildet werden kann, ist das wenigstens eine Volumenhologramm derart ausgebildet, dass nur ein definiertes Spektrum des Lichts von dem Volumenhologramm abgelenkt wird, um insbesondere mittels des Volumenhologramms transportiert zu werden. So kann beispielsweise Licht, welches zum Erfassen des Bildes nötig ist, von dem Teilbereich der Scheibe, welcher als Optik dient, weg geleitet werden. Das Transportieren kann insbesondere nur für einzelne definierte Lichtwellenlängen des Spektrums möglich sein, wohingegen der Rest des Lichtspektrums nicht abtransportiert sondern transmittiert wird.

Als Lichtquelle für die Anzeige des Bilds kann beispielsweise ein Laser beziehungsweise ein Laserscanner und/oder Dioden, mit insbesondere definierter Wellenlänge, verwendet werden. Alternativ oder zusätzlich kann als die Lichtquelle ein Projektor genutzt werden. Die optische Funktion unterscheidet sich jedoch, so dass eine optische Funktion für DLP beziehungsweise LCD-Projektor nicht mit Laserprojektoren verwendet werden könnte. Dabei kann die Lichtquelle für eine Anzeige derart angeordnet werden, dass eine Lichteinspeisung des Lichts der Lichtquelle vorzugsweise außerhalb eines Sichtbereiches eines Betrachters, beispielsweise den Fahrer oder einen anderen Nutzer des Fahrzeugs, erfolgt. Um die Lichteinspeisung möglichst effizient zu gestalten, sollte ein Abstand zwischen Lichtquelle und Scheibe möglichst klein gehalten werden. Ferne sollte eine Bewegung zwischen Medium, das heißt der Scheibe und der Lichtquelle möglichst klein sein, dazu kann die Lichtquelle fest mit der Scheibe verbunden sein.

Um Licht auf den lichtempfindlichen Bildsensor der Kameravorrichtung zu leiten, sodass das Erfassungsbild durch die erfindungsgemäße Anzeigevorrichtung erfassbar ist, ist die Optik der Kameravorrichtung zumindest teilweise durch den Teilbereich, innerhalb welchen das Volumenhologramm angeordnet ist, gebildet. Es besteht alternativ oder zusätzlich die Möglichkeit, dass mehrere Volumenhologramme innerhalb des transparenten Teilbereichs der Scheibe angeordnet sind, wobei jeweils wenigstens ein Volumenhologramm für die Erzeugung des Anzeigebilds als sogenannte bilderzeugende Ebene und jeweils wenigstens ein Volumenhologramm für das Erfassen des Erfassungsbilds als Erfassungsbereich verwendet werden können. Auch können innerhalb des Teilbereichs jeweils unterschiedliche Areale als jeweils eine Optik verwendet werden, wobei jeweils ein Areal jeweils einem Bildsensor der Kameravorrichtung zugeordnet ist, sodass mehrere Bilderfassungen, insbesondere aus verschiedenen Aufnahmewinkeln, möglich sind. Durch die erfindungsgemäße Anzeigevorrichtung sind, insbesondere unter Nutzung des wenigstens einen Volumenhologramms, Gegenstände mittels des wenigstens einen Anzeigebilds nicht nur für einen Benutzer räumlich erscheinend darstellbar sondern auch mittels wenigstens eines Erfassungsbilds räumlich erfassbar. Vorteilhaft im Hinblick auf eine Ausfallsicherheit ist, dass die erfindungsgemäße Anzeigevorrichtung hilft, eine Vielzahl an Bauteilen zu vermeiden, was sich darüber hinaus auch bei den Kosten bemerkbar macht.

Die räumliche Anzeige ist beispielsweise nicht ohne weiteres mittels eines Waveguides erzielbar ist. Dafür wären mehrere Tiefenebenen nötig beziehungsweise eine holographische Projektion. Ein besonders großer Vorteil der Erfindung liegt insbesondere darin, Anzeige- und Aufnahmeelement aus dem Sichtfeld, insbesondere des Fahrers, zu entfernen, indem sie z.B. in einem Türrahmen verbaut werden beziehungsweise sind.

Der Erfindung liegt insbesondere folgende Erkenntnis zugrunde: Heutige Fahrzeuge sind teilweise mit einem sogenannten Head-up-Display (HUD) ausgestattet, welches es einem Fahrer des Fahrzeugs ermöglicht, seine Blickrichtung beizubehalten und Informationen einen Zustand des Fahrzeugs betreffend, wie beispielsweise die Geschwindigkeit, direkt in sein Sichtfeld projiziert zu bekommen. Dadurch muss der Fahrer des Fahrzeugs seinem Blick nicht von der Fahrbahn abwenden, was beispielsweise eine Verkehrssicherheit erhöhen kann. Ein Nachteil dieser Technologie ist, dass es beispielsweise nicht möglich ist 3-D-Inhalte physikalisch korrekt mit tiefen Informationen darzustellen. Vielmehr muss ein 3-D-Effekt beispielsweise durch eine Verfolgung der Augenbewegung des Betrachters imitiert werden. Ein weiterer Nachteil eines HUDs ist der benötigen Bauraum.

Alternativ zu einem HUD wird heutzutage versucht mittels aufgeklebter OLED-Elemente, unbeleuchteten LCD-Folien, SED-Displays, vergossenen LEDs, sowie semitransparenten Flächen dem Fahrer des Fahrzeugs Informationen in seinem Sichtfeld optisch darzustellen. Ein Nachteil der genannten Möglichkeiten ist, dass die Bildebene der bilderzeugenden Ebene entspricht, was bei einem nahen Betrachtungsabstand zu Problemen bei einer Fokussierung führen kann. So müssen Augen des Fahrers bei einem Wechsel von dem erzeugten Bild zur Fahrbahn ihre Fokussierung ändern, was sich beispielsweise negativ beim Erkennen von Gefahrensituationen auswirken kann. Des Weiteren sind bei den LCD-Folien und OLED-Elementen die Transparenz und die Hitzebeständigkeit ein Problem. Die Langlebigkeit von OLEDs und SEDs ist ebenfalls, gemessen an der Lebensdauer eines Fahrzeugs, nicht vorteilhaft. Ferner sind die physikalische Auflösung sowie die Biegsamkeit, als auch Beschnittmöglichkeiten und Ansteuerung der genannten Displaytechnologien nicht ideal für den Einsatz in einem Fahrzeug.

Darüber hinaus weisen Fahrzeuge häufig Kamerasysteme auf, welche beispielsweise für einer Umfelderfassung verwendet werden. Für manche Anwendungen kann es sinnvoll sein, beispielsweise für einen gewünschten beziehungsweise geforderten Aufnahmewinkel, eine Kamera derart anzuordnen, dass ihre Optik beispielsweise im Blickfeld des Betrachters, insbesondere des Fahrers, liegen würde. Es gibt Ansätze zur Integration von Kameras in Displays, welche die Pixel direkt auswerten, auf Subpixel setzen oder eine Kamera in eine Anzeigefläche integrieren. Dies ist bei dem Fahrer des Fahrzeugs nachteilig, da durch die Integration der Kamera beispielsweise sein Sichtbereich beeinträchtigt werden kann.

In vorteilhafter Ausgestaltung der Erfindung weist das Volumenhologramm optische Elemente auf, mittels welchen Licht, welches an wenigstens einer ersten Stelle in die Scheibe einfällt, zu wenigstens einer von der ersten Stelle unterschiedlichen zweiten Stelle zu leiten ist, an welcher das Licht aus der Scheibe auskoppelbar ist. Der Weg denn das Licht dabei zurücklegt, kann in entgegengesetzter Richtung durchlaufen werden, das heißt das Licht kann an der wenigsten zweiten Stelle einkoppelbar und an der wenigsten ersten Stelle auskoppelbar sein. Durch die optischen Elemente an den jeweiligen Stellen, kann nun in vorteilhafter Weise Licht, welches in die Scheibe beziehungsweise das Volumenholgramm einfällt, in selbiges einkoppeln, sodass das eingekoppelte Licht innerhalb des Volumenholgramms transportiert wird. Befindet sich das Licht derart im Volumenhologramm, dass es sich quasi innerhalb des Volumenhologramms, durch beispielsweis Vorgänge ähnlich der Totalreflexion ausbreitet, kann es an der zweiten Stelle mittels eins weiteren optischen Elements ausgekoppelt werden, dies kann für definierte Wellenlängen, des Lichts gegeben sein. Ein jeweiliges optisches Element, welches auch als optische Funktion bezeichnet werden kann, kann also als Einkoppelelement und/oder Auskoppelelement des Lichts verwendet werden. Mit anderen Worten kann das optische Element einen Lichtstrahl derart modifizieren, dass dieser am optischen Element zumindest seine Richtung wechseln kann. Somit wird der von außerhalb der Scheibe auf das optische Element treffende Lichtstrahl in diese eingekoppelt und der sich innerhalb der Scheibe bewegende Lichtstrahl beim Auftreffen auf das optische Element von diesem aus der Scheibe heraus gelenkt, das heiß ausgekoppelt.

In vorteilhafter Ausgestaltung der Erfindung ist das von der Lichtquelle bereitgestellte Licht an der ersten Stelle in die Scheibe einkoppelbar. Mit anderen Worten bildet die erste Stelle, welche insbesondere durch die optischen Elemente gebildet wird, eine Schnittstelle, an welcher Licht in das Volumenhologramm eingekoppelt werden kann beziehungsweise einkoppelbar ist. Um nun das Licht der Lichtquelle, insbesondere für eine anschließende Darstellung des Anzeigebilds, in die Scheibe beziehungsweise das Volumenhologramm einzukoppeln, ist die Lichtquelle, insbesondere für den von ihr aus gestrahlten beziehungsweise bereitgestellten Wellenlängenbereich des Lichts, lichtleitend mit der ersten Stelle verbindbar.

In vorteilhafter Ausgestaltung der Erfindung ist das an der zweiten Stelle aus der Scheibe ausgekoppelte Licht mittels des Bildsensors erfassbar. Mit anderen Worten bildet die zweite Stelle, welche insbesondere durch die optischen Elemente gebildet wird, eine weitere Schnittstelle, an welcher Licht aus dem Volumenhologramm ausgekoppelt werden kann beziehungsweise auskoppelbar ist. Um nun das zur Erfassung des Bildes mittels der Kameravorrichtung aus der Scheibe beziehungsweise dem Volumenhologramm austretendes Licht auf den Bildsensor zu lenken, ist dieser lichtleitend mit der zweiten Stelle verbindbar.

Durch die beiden genannten Schnittstellen und die optischen Elemente ist es in besondere vorteilhafter Weise möglich, das Volumenholgramm sowohl zur Darstellung von Anzeigebildern, als auch zum Erfassen von Erfassungsbildern zu verwenden. Die Anordnung der optischen Elemente kann eine Auflösung jeweils des Anzeigebilds und jeweils des Erfassungsbilds charakterisieren. Durch die optischen Elemente ergibt sich der Vorteil, dass das Licht beispielsweise an einer Stelle, an welcher die Scheibe als Optik ausgebildet ist einkoppelbar ist und an der zweiten Stelle auskoppelbar und dem Bildsensor zuführbar ist. Ferner kann das Licht der Lichtquelle an wenigstens einer der wenigstens einen ersten Stelle eingekoppelt und an wenigstens einer der wenigstens einen zweiten Stelle ausgekoppelt werden, um ein, insbesondere für einen menschlichen Betrachter räumlich erscheinendes, Bild zu erzeugen. Das Bild ist auf einer Bildebene im Raum, jedoch nicht "räumlich". Dies bedeutet, dass es nicht aus mehreren Blickwinkeln betrachtet werden kann. Vorstellbar ist dies wie eine Transparentfolie, die vor auf oder hinter einer Glasscheibe liegt.

Gemäß der Erfindung bildet der Teilbereich die gesamte Optik der Kameravorrichtung. Mit anderen Worten werden für die Erfassung des Bildes mittels des Bildsensors keine weiteren Bauteile beziehungsweise Optiken benötigt, als der Teilbereich der Scheibe mit dem innerhalb angeordneten Volumenhologramm. Das heißt der Teilbereich der Scheibe ist derart ausgebildet, dass dieser Licht, welches von Objekten beziehungsweise dem jeweiligen Bildmotiv vor und/oder hinter der Scheibe ausgesendet wird und auf den Teilbereich der Scheibe trifft, derart aufnehmen und an den Bildsensor der Kameravorrichtung abgeben kann, dass das Licht den Bildsensor derart belichtet, dass die Kameravorrichtung ein Bild aufnimmt, welches die Objekte vor und/oder hinter der Scheibe zeigt. In weiterer Ausgestaltung der Erfindung ist der Bildsensor direkt an der Scheibe angeordnet und berührt diese direkt. Der Bildsensor ist derart beispielsweise an der zweiten Stelle der Scheibe angeordnet, an welcher die optischen Elemente Licht auskoppeln, sodass er das ausgekoppelte Licht direkt erfassen kann, ohne beispielsweise einen weiteren Lichtleiter zu verwenden, das hat beispielsweise die Vorteile, dass Störungen aufgrund einer erhöhten Bauteilanzahl klein gehalten werden können und Bauraum gespart werden kann.

Gemäß der Erfindung ist die Scheibe auf einer dem Bildsensor gegenüberliegenden Seite mit einer in Überlappung mit dem Bildsensor angeordneten Reflexionsschicht versehen. Zusätzlich ist der Einsatz einer lichtabsorbierende Schicht denkbar. Dadurch kann mehr Licht reflektiert, beziehungsweise zusätzlich Streulicht verhindert werden. Die Reflexionsschicht kann beispielsweise Licht, welches insbesondere an der zweiten Stelle, am Ort des Bildsensors aus der Scheibe beziehungsweise dem Volumenhologramm ausgekoppelt wird, reflektieren und in den Bildsensor lenken. Durch eine geeignete Ausrichtung leitet die Reflexionsschicht Licht, welches die Reflexionsschicht trifft an entsprechender Stelle auf den Bildsensor, an welcher das Licht auf diesem aufgetroffen wäre, wenn es direkt auf der dem Bildsensor zugewandten Seite aus der Scheibe ausgetreten wäre. Dadurch wird die Menge des auf den Bildsensor treffenden Lichts erhöht, wodurch eine Qualität des Erfassungsbilds erhöht werden kann. Ferner vermindert die Reflexionsschicht ein Einfallen von beispielsweise Streulicht, was die Qualität des Erfassungsbilds weiter erhöht. Darüber hinaus kann die Reflexionsschicht zusätzlich auf einer der Lichtquelle gegenüberliegenden Seite der Scheibe, insbesondere in Überlappung mit dem Lichtquelle, angeordnet sein, wobei sich dadurch eine Lichtintensität des Anzeigebilds erhöhen kann.

In vorteilhafter Ausgestaltung der Erfindung ist das Volumenhologramm durch wenigstens eine innerhalb der Scheibe angeordnete Folie gebildet. So kann beispielsweise eine erste Schicht der Scheibe mit der Folie beklebt werden, auf welche eine zweite Schicht der Scheibe geklebt wird, sodass beispielsweise eine sogenannte Sandwichstruktur ausgebildet wird. Mittels der Folie ist das Volumenhologramm besonders einfach und daher kosteneffizient an beziehungsweise in der Scheibe anordenbar. Ferner kann durch Verwendung der Folie die Scheibe zweidimensional und dreidimensional gewölbt sein. Darüber hinaus ist eine einfache Stapelung mehrerer Volumenhologramme möglich.

In vorteilhafter Ausgestaltung der Erfindung ist die Scheibe als Seitenscheibe oder Windschutzscheibe des Fahrzeugs ausgebildet. Ist die Scheibe beispielsweise als Seitenscheibe ausgebildet, kann diese in ein Türöffnungssystem integriert werden, sodass der Fahrer oder ein Besitzer des Fahrzeugs beim einem Herantreten an selbiges, mittels der durch den wenigstens einen Teilbereich ausgebildeten Optik der Kameravorrichtung, erfasst wird. Im Gegenzug kann der Fahrer eine optische Rückmeldung auf einer Bildebene vor oder hinter der Scheibe erhalten, welche ihn darüber informiert, dass das Fahrzeug geöffnet wurde. Dabei ist die Bildebene die Ebene in der das Anzeigebild dem Betrachter erscheint, diese ist dank der erfindungsgemäßen Anzeigevorrichtung unabhängig von der bilderzeugenden Ebene. Ist die Scheibe der Anzeigevorrichtung dagegen als Windschutzscheibe ausgebildet, kann der Fahrer beispielsweise wichtige Informationen betreffend einen Zustand des Fahrzeugs direkt in seinen Sichtbereich eingeblendet bekommen. Darüber hinaus können durch die Optik Gegenstände außerhalb des Fahrzeugs erfasst werden, zu welchem mittels erweiterter Realität direkt an der Position des erfassten Gegenstands, insbesondere ohne Paralaxenfehler, Zusatzinformationen zu dem Gegenstand eingeblendet werden können.

Die Erfindung kann insbesondere in beziehungsweise für transparente Scheiben, insbesondere Glasscheiben, außerhalb von Fahrzeugen, das heißt für jedwede Anwendung genutzt werden.

Des Weiteren ist es denkbar, dass eine Möglichkeit beziehungsweise Vorrichtung zur pixelgenauen Verdunkelung der Scheibe, etwa per LCD-Element, vorgesehen ist, damit Bildinhalte auch bei hellem Außenlicht dargestellt werden können. Dies ist vorteilhaft, da Bildinhalte in einem Volumenhologramm nur mit begrenzter Helligkeit dargestellt und somit relativ schnell vom Hintergrund überblendet werden können.

In weiterer vorteilhafter Ausgestaltung der Erfindung ist das Bild von dem Betrachter in wenigstens einer vor und/oder hinter der Scheibe angeordneten, insbesondere virtuellen oder reellen, Bildebene optisch wahrnehmbar. Durch das wenigstens eine Volumenhologramm der Anzeigevorrichtung, ist es möglich, dass mehrere Bildebenen dargestellt werden können. Somit können unterschiedliche Tiefen und/oder Effekte erzeugt werden. Beispielsweise könnte ein Kopf einer darzustellenden Person auf einer vom Betrachter aus gesehenen hinter der bilderzeugenden Ebene, dem durch das Volumenhologramm gebildeten Teilbereich der Scheibe, liegenden Bildebene erscheinen und Arme der darzustellenden Person auf einer vor der bilderzeugende Ebenen liegenden Bildebene abgebildet werden. Dabei kann die hinter der bilderzeugenden Ebene liegenden Bildebene als virtuelle Ebene und die vor der bilderzeugenden Ebene liegenden Bildebene, jeweils in Blickrichtung eines Betrachter gesehen, als reelle Ebene bezeichnet werden. Somit können durch das Volumenhologramm variable Bildinhalte mit räumlicher Tiefe abgebildet werden, bei welchen die Bildebene insbesondere nicht der bilderzeugenden Ebene entspricht. Dadurch, dass die Bildebene, das heißt, die Ebene in welcher das Bild durch den Betrachter zu sehen ist, nicht mit der bilderzeugenden Ebene zusammenfallen muss, sondern insbesondere weiter vom Auge des Betrachters entfernt sein kann, führt das Betrachten des durch die Anzeigevorrichtung dargestellten Anzeigebilds nicht zu einem Problem bei der Fokussierung. Ferner ist eine Darstellung des Inhalts des Bildes als Hologramm möglich, jedoch sind auch 2-D-Bilder mit imitierter Tiefe möglich. Die Möglichkeit der Anzeigevorrichtung Bildinhalte vor sowie hinter der Scheibe erscheinen zu lassen kann dafür genutzt werden, Objekte in den Raum hinein zu projizieren und/oder Informationen beispielsweise derart darzustellen, dass Information, welche weiter weg vom Betrachter dargestellt werden, weniger relevant für den Betrachter sind, wodurch dieser in der Lage ist die Informationen leichter einzuordnen.

In weiterer vorteilhafter Ausgestaltung der Erfindung ist der Teilbereich der Scheibe zusätzlich mit einer opaque schaltbaren Schicht versehen. Diese Schicht kann beispielsweise durch eine abdunkelbare LCD-Folie ausgebildet sein. Dadurch ist es möglich die Scheibe auf einer Seite derart abzudunkeln, dass durch diese keinen Licht, welches sich außerhalb der Folie befindet einfallen kann, dies kann beispielsweise dazu führen das der Hintergrund für die Anzeige beruhigt wird oder das Bild beispielsweise bei hellen Umgebungen intensiver und/oder kontrastreicher wahrgenommen wird. Ferner kann dadurch gezielt ein jeweiliges Bild einer jeweiligen Seite der Scheibe aufgenommen werden. Mittels der schaltbaren Schicht kann die Scheibe auch als Bildschirm verwendet werden.

Bei der erfindungsgemäßen Anzeigevorrichtung kann das Einkoppeln des Lichts von der Lichtquelle, das heißt die Bildeinspeisung, von einer beliebigen Seite der Scheibe aus erfolgen. Mittels der Eigenschaften des Volumenholgramm und/oder der optischen Elemente kann eine Bearbeitung des eingespeisten Bildes erfolgen, beispielsweise ein Skalieren und/oder Reflektieren. Durch die Nutzung des wenigstens einen Volumenhologramms zur Erfassung von Bildern mittels der Kameravorrichtung, ist insbesondere die Optik für den Betrachter nicht wahrnehmbar. Der Betrachter ist somit in der Lage, beispielsweise ungestört einen Film anzusehen oder durch die Scheibe zu blicken. Ferner kann die Scheibe für eine Videotelefonie verwendet werden. Einer der Vorteile, welchen die Anzeigevorrichtung bei der Videotelefonie hat, ist, dass sich die Gesprächspartner direkt Anschauen könnten, da bilderzeugende Ebene und Aufnahmeebene zusammen fallen, da keine Parallaxe, beispielsweise durch eine oberhalb der bilderzeugenden Ebne montierte Kamera, auftritt.

Ferner können mehrere Bildsensoren, insbesondere mit unterschiedlichen Aufzeichnungsverfahren und/oder Brennweiten an unterschiedlichen Stellen und sogar übereinander angeordnet werden. Durch die Nutzung mehrerer Optiken und mehrerer Bildsensoren ist eine gleichzeitige Erfassung unterschiedlicher Perspektiven eines Bildmotivs möglich, sodass Rückschlüsse über dessen Geometrie beziehungsweise den in Aufnahmerichtung liegenden Raum ableitbar sind. Darüber hinaus kann die Kameravorrichtung Bilder auf beiden Seiten der Scheibe erfassen. So kann beispielsweise eine Umfelderfassung gleichzeitig mit einer Überwachung des Benutzers beispielsweise dem Fahrer des Fahrzeugs stattfinden. Wobei die Überwachung beispielsweise das Erkennen von Pupillenbewegungen zum sogenannten Eye-Tracking sein kann.

Die bilderzeugenden Ebene kann als Optik beziehungsweise Aufnahmeebene verwendet werden und somit als Objektivöffnung, in die Licht eintritt, welches anschließend durch die optischen Elemente umgelenkt und zu dem Bildsensor geleitet wird. Ferner lassen sich beispielsweise durch mehrere Aufnahmeebenen in der Scheibe unterschiedliche Tiefen und/oder Effekte erzeugen. Beispielsweise können auch unterschiedliche Lichtspektren und/oder Perspektiven erfasst und aufgezeichnet werden.

Durch die Nutzung des Volumenhologramms zur gleichzeitigen Aufnahmen Anzeige von Bildern mit wenigstens einer Kameravorrichtung und wenigstens einer bilderzeugenden Ebene ist eine besonders kompakte Bauform möglich. Ferner kann durch die Nutzung mehrerer bilderzeugender Ebenen beziehungsweise Aufnahmeebenen nebeneinander und/oder hintereinander vorhandener Bauraum noch effizienter genutzt werden. Vorteilhafterweise wird die Lichtquelle und/oder die Kameravorrichtung direkt in die Scheibe integriert.

Zur Erfindung gehört auch ein Fahrzeug, insbesondere ein Kraftfahrzeug wie beispielsweise ein Kraftwagen, mit wenigstens einer erfindungsgemäßen Anzeigevorrichtung. Zu der Erfindung gehören auch Weiterbildungen des erfindungsgemäßen Fahrzeugs, die Merkmale aufweisen, wie sie bereits im Zusammenhang mit den Weiterbildungen der erfindungsgemäßen Anzeigevorrichtung beschrieben worden sind. Aus diesem Grund sind die entsprechenden Weiterbildungen des erfindungsgemäßen Fahrzeugs hier nicht noch einmal beschrieben.

Im Folgenden sind Ausführungsbeispiele der Erfindung beschrieben. Hierzu zeigt:
- Fig. 1: eine erste Ausführungsform einer Anzeigevorrichtung mit einer Scheibe und einem in einem transparenten Teilbereich der Scheibe angeordnetem Volumenhologramm und einer Lichtquelle und einer Kameravorrichtung;
- Fig. 2: einen seitlichen Schnitt durch die Scheibe der Anzeigevorrichtung gemäß Fig. 1;
- Fig. 3: einen seitlichen Schnitt durch die Scheibe einer zweiten Ausführungsform der Anzeigevorrichtung;
- Fig. 4: einen seitlichen Schnitt durch die Scheibe einer dritten Ausführungsform der Anzeigevorrichtung;
- Fig. 5: einen Ausschnitt der Scheibe gemäß einer vierten Ausführungsform aufweisend zwei Bildsensoren der Kameravorrichtung;
- Fig. 6: eine fünfte Ausführungsform der Anzeigevorrichtung aufweisend mehrere Teilbereiche mit jeweiligen Volumenhologrammen; und
- Fig. 7: zeigt die erste Ausführungsform in einer seitlichen Perspektivansicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

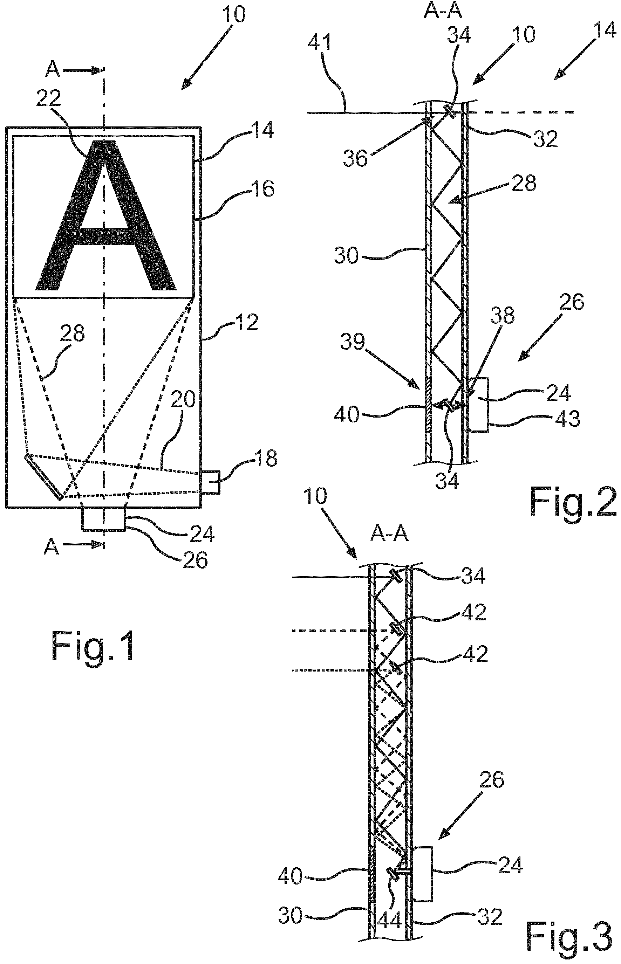

Fig. 1 zeigt eine erste Ausführungsform einer Anzeigevorrichtung 10 für ein Fahrzeug, mit wenigstens einer Scheibe 12, mit wenigstens einem zumindest innerhalb eines transparenten Teilbereichs 14 der Scheibe 12 angeordneten Volumenhologramm 16, und mit wenigstens einer Lichtquelle 18, mittels welcher in das Volumenhologramm 16 Licht 20 einkoppelbar ist beziehungsweise eingekoppelt wird. Aus dem Licht 20 ist mittels des Volumenhologramms 16 wenigstens ein für einen menschlichen Betrachter räumlich erscheinendes Bild 22 erzeugbar. Dies bedeutet, dass mittels der Anzeigevorrichtung 10 das Bild 22 erzeugbar ist beziehungsweise erzeugt und dadurch angezeigt wird.

Um nun mittels der Anzeigevorrichtung 10 zusätzlich zu dem Anzeigen beziehungsweise zu einer Darstellung des Bildes 22 zusätzliche ein Erfassen wenigstens eines Bildes zu ermöglichen, weist die Anzeigevorrichtung 10 wenigstens eine zumindest einen lichtempfindlichen Bildsensor 24 aufweisende Kameravorrichtung 26 auf, deren Optik 28, über welche mittels des Bildsensors 24 Bilder erfassbar sind, zumindest teilweise durch den Teilbereich 14 gebildet ist.

Vorteilhafterweise ist der Bildsensor 24 direkt an der Scheibe 12 angeordnet und berührt diese, wodurch beispielsweise Verluste von Licht, welches auf den Bildsensor 24 trifft, möglichst gering sind. Zusätzlich dazu ist in der gezeigten Ausführungsform die Lichtquelle 18 ebenfalls direkt an der Scheibe 12 angeordnet, wodurch ebenfalls Verluste des Lichts 20 möglichst gering sind. Durch das Aus- beziehungsweise Einkoppeln des Lichts direkt an der Scheibe kann auf zusätzliche Lichtleiter verzichtet werden, wodurch Kosten eingespart werden.

Mittels der die Kameravorrichtung 26 aufweisenden Anzeigevorrichtung 10 sind gleichzeitig ein Erfassen und Anzeigen wenigstens eines jeweiligen Bilds durchführbar. Das wenigstens eine erfasste beziehungsweise erfassbare Bild wird auch als Aufnahmebild oder Erfassungsbild bezeichnet, wobei das wenigstens eine angezeigte beziehungsweise anzuzeigende Bild, wie beispielsweise das Bild 22, auch als Anzeigebild bezeichnet wird. Dabei bildet eine für das Anzeigen des Anzeigebilds genutzte, bilderzeugende Ebene, die durch den Teilbereich 14 gebildet ist, in welchem das Volumenhologramm 16 angeordnet ist, gleichzeitig die Optik 28 aus und ermöglicht somit das Erfassen des Aufnahmebilds. Dadurch ergibt sich der Vorteil, dass Bauteile eingespart werden können, was eine Ausfallsicherheit erhöhen und Kosten reduzieren kann.

Vorteil der gezeigten Anzeigevorrichtung 10 ist, dass die Scheibe 12 transparent ist und weiterhin als solche genutzt werden kann. Ferner sind durch die Verwendung des Volumenhologramms 16 ein Erzeugen und ein Erfassen von räumlichen Inhalten möglich. Das heißt Objekte können dreidimensional aufgenommen und angezeigt werden. Des Weiteren kann ein Bildmotiv für das Erfassungsbild durch die Anzeigevorrichtung 10 direkt ausgeleuchtet werden.

Fig. 2 zeigt einen seitlichen Schnitt entlang der A-A Ebene durch die Scheibe 12 der Anzeigevorrichtung 10 gemäß Fig. 1. Dabei ist das Volumenhologramm 16 zwischen einer ersten Schicht 30 und einer zweiten Schicht 32 der Scheibe 12 angeordnet. Dabei kann das Volumenhologramm 16 als wenigstens eine innerhalb zumindest eines Teilbereichs 14 der Scheibe 12 angeordnete holographische Folie ausgebildet sein. Bei dieser und den weiteren Ausführungsformen wird ein holographischer Wellenleiter durch die zwei Schichten 30 und 32 und das zwischen diesen Schichten eingebettete Volumenhologramm 16 gebildet. Innerhalb des Wellenleiters breiten sich Lichtstrahlen, ähnlich einem Lichtleiter, durch Totalreflexion aus. Die holographische Folie kann beispielsweise mittels Laser mit optischen Funktionen versehen werden. Dabei ist zumindest ein Teil der optischen Funktionen als optische Elemente 34 (ab Fig. 3 zusätzlich 42, 44) ausgebildet. Diese ermöglichen eine Modifizierung von Lichtstrahlen, insbesondere bestimmter, definierbarer Wellenlängen. Dabei kann die Modifizierung beispielsweise eine Brechung, Beugung und/oder Reflexion wenigstens eines Lichtstrahls in Abhängigkeit seiner Wellenlänge sein, wodurch das optische Element 34 Lichtstrahlen lenken kann. Ein Lichtstrahl 41, welcher in die Scheibe 12 einfällt und dabei auf das wenigstens eine optische Element 34 trifft, wird innerhalb des Volumenhologramms 16 derart geführt, dass er auf ein weiteres optisches Element 34 trifft, an welchem er aus der Scheibe 12 ausgekoppelt und auf dem Bildsensor 24 gelenkt wird.

Das optische Element 34 kann so ausgebildet sein, dass es nur Licht eines bestimmten Wellenlängenbereichs in das Volumenhologramm 16 leitet, sodass das Volumenhologramm 16 und dadurch der Wellenleiter beziehungsweise die Scheibe 12 für Licht anderen Wellenlängen transparent erscheint. Durch diese Transparenz ist eine unsichtbare Integration in die Scheibe 12 möglich.

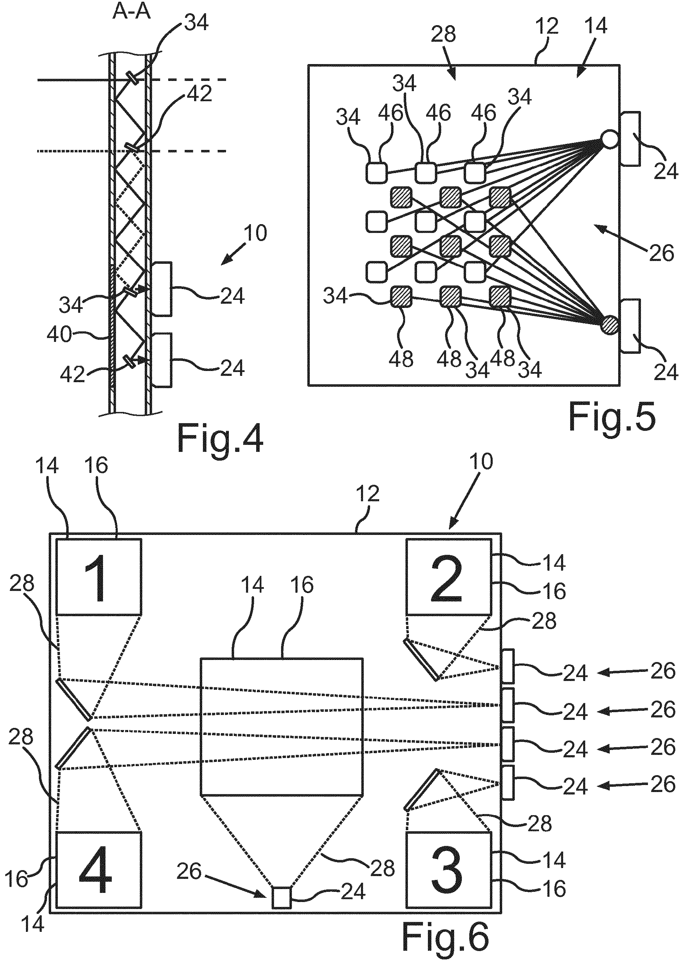

Mehrere optische Elemente 34 (vgl. Fig. 5) sind zumindest über den Teilbereich 14 und damit über die bilderzeugende Ebene verteilt und dazu ausgebildet, Licht der Lichtquelle 18 aus dem Wellenleiter auszukoppeln, wodurch das Bild 22 anzeigbar wird. Die zur Anzeige des Anzeigebilds verwendeten optischen Elemente 34 können auch zur Erfassung des Erfassungsbildes genutzt werden. Stattdessen oder zusätzlich können mehrere weitere optische Elemente 34, welche zumindest teilweise über den Teilbereich 14 verteilt beziehungsweise angeordnet sind, angeordnet sein und zumindest teilweise die Optik 28 derart ausbilden, dass Licht in die Scheibe 12 einkoppeln kann. Dabei kann der Teilbereich 14 der Scheibe, welcher die zumindest teilweise die Optik 28 ausbildenden und das Licht in die Scheibe 12 einkoppelnden optischen Elemente 34 aufweist als Erfassungsebene bezeichnet werden. Mit anderen Worten kann mittels der optischen Elemente 34 Licht, welches an wenigstens einer ersten Stelle 36, beispielsweise der Erfassungsebene, in die Scheibe einfällt, zu wenigstens einer von dieser ersten Stelle 36 unterschiedlichen zweiten Stelle 38 geleitet werden, an welcher das Licht aus der Scheibe auskoppelbar ist. An dieser zweiten Stelle 38 ist das Licht beispielsweise mittels des Bildsensors 24 erfassbar.

Für das Erfassen beziehungsweise die Erfassung des Bildes durch die Kameravorrichtung 26 ist die Optik 28 durch den Teilbereich 14 der Scheibe 12 gebildet. Um eine möglichst hohe Lichtausbeute beim Erfassen des Erfassungsbildes mittels des Bildsensors 24 zu erhalten, ist an der Scheibe 12 auf der dem Bildsensor gegenüberliegenden Seite 39 eine Reflexionsschicht 40 derart angeordnet, dass eine Überlappung mit dem Bildsensor 24 gegeben ist. Ein Gehäuse 43 der Kameravorrichtung 16 kann beispielsweise mit der Scheibe 12 verklebt sein und in seinem Inneren frei bewegliche Bildstabilisatoren aufweisen, wodurch eine verwackelte Aufnahme verhindert werden kann. Analog dazu kann die Lichtquelle 18 ebenfalls verklebt und/oder mit einem weiteren Bildstabilisator, einer sogenannten Anti-Shake-Eirichtung, ausgestattet werden. Der Bildstabilisator kann alternativ mittels Software umgesetzt werden.

Durch die Eigenschaft des holographischen Wellenleiters beziehungsweise des Volumenhologramms 16 Licht, zumindest eines bestimmten Wellenlängenbereichs transportieren zu können, ist der Bildsensors 24 und/oder die Lichtquelle 18 außerhalb eines Sichtbereichs platzierbar.

Anstelle der in Fig. 2 gezeigte Kameravorrichtung 26 kann an der Stelle 38 die Lichtquelle 18 angeordnet werden, sodass der gezeigte Lichtstrahl 41 von der Lichtquelle 18 ausgesendet wird und das Volumenhologramm 16 in entgegengesetzter Richtung durchläuft und somit die Stelle 36 aus der Scheibe 12 auskoppelt. Der Teilbereich 14 der Scheibe 12, an welchem das Licht 20 zum erzeugen des Anzeigebilds die Scheibe 12 verlässt, das heißt aus dieser ausgekoppelt, wird auch als bilderzeugenden Ebene bezeichnet, wobei die bilderzeugende Ebene mit dem Teilbereich 14 zusammenfällt. Die optischen Elemente 34 und/oder der Bildsensor 24 und/oder die Lichtquelle 18 können derart ausgebildet sein, dass ein gemeinsames beziehungsweise gleichzeitiges Einkoppeln und Auskoppeln an der Stelle 36 und/oder 38 stattfinden kann.

Fig. 3 zeigt einen seitlichen Schnitt entlang der A-A Ebene durch die Scheibe 12 einer zweiten Ausführungsform der Anzeigevorrichtung 10. Im Vergleich zu der in Fig. 2 gezeigten Ausführungsform weist diese zweite Ausführungsform weitere optische Elemente 42 auf, welche dazu ausgebildet sind Licht jeweils einer anderen Wellenlänge als das optische Element 34 und das jeweils andere optische Element 42 in die Scheibe 12 einzukoppeln. Im Gegensatz dazu ist das optische Element 44 dazu ausgebildet, Licht der drei unterschiedlichen Wellenlängen auszukoppeln.

Fig. 4 zeigt einen seitlichen Schnitt entlang der A-A Ebene durch die Scheibe 12 einer dritten Ausführungsform der Anzeigevorrichtung 10. Im Unterschied zu der in Fig. 3 gezeigten Ausführungsform weist diese Ausführungsform kein optisches Element 44 auf, welches Licht unterschiedlicher Wellenlängen umlenken kann, sondern jeweils optische Elemente 34 für eine ersten Wellenlänge und optische Elemente 42 für eine zweite Wellenlänge. Dabei können die optischen Elemente 34 beispielsweise Licht im Infrarotbereich einbeziehungsweise auskoppeln und die optischen Elemente 42 Licht beispielsweise im ultravioletten Bereich aus- beziehungsweise einkoppeln. So kann das Licht jeweils auf einen Bildsensor 24 geleitet werden, welcher jeweils zur Aufnahme des Lichts der jeweiligen Wellenlänge geeignet ist. So können beispielsweise zwei unterschiedliche Kameravorrichtungen 26 zur Trennung unterschiedlicher Lichtspektren verwendet werden.

Durch die Nutzung unterschiedlicher optischer Funktionen beziehungsweise optischer Elemente 34, 42, 44, können abgegrenzte Lichtspektren ein- und ausgekoppelt werden, wodurch sich Licht in Abhängigkeit seiner Wellenlänge beziehungsweise seines Wellenlängenbereichs, an unterschiedliche Orte beziehungsweise Stellen transportieren lässt. Somit können beispielsweise mit unterschiedlichen Kameravorrichtungen 26, beispielsweise für Infrarot und Ultraviolett und/oder sichtbares Licht, jeweilige Bilder erfasst werden.

Fig. 5 zeigt einen Ausschnitt der Scheibe 12 gemäß einer vierten Ausführungsform, wobei die Anzeigevorrichtung 10 zwei Bildsensoren 24 einer Kameravorrichtung 26 aufweist. Die hell dargestellten Bildpunkte 46, welche jeweils ein optisches Element 34 aufweisen, stellen dabei eine erste Optik 28 der Kameravorrichtung 26 dar. Die dunkel dargestellten Bildpunkte 48, welche jeweils wieder ein optisches Element 34 aufweisen, stellen eine zweite Optik 28 der Kameravorrichtung 26. Die Bildpunkte 46 und 48 sind innerhalb des Teilbereichs 14 angeordnet und bestimmen jeweils eine Auflösung des jeweiligen aufgenommen Bildes. Durch die beiden Optiken 28, wobei eine jeweils die Bildpunkten 46 und die andere die Bildpunkten 48 umfasst, ergeben sich für die Erfassung eines Bildmotivs zwei unterschiedliche Perspektiven, welche jedoch überlappen, wodurch die beiden Erfassungsbilder zueinander leicht versetzt sind. Dies kann beispielsweise einer späteren Verwendung der Bilder für Effekte genutzt werden.

Fig. 6 zeigt eine fünfte Ausführungsform der Anzeigevorrichtung 10, welche mehrere Teilbereiche 14 aufweist, wobei jeweils an einem Teilbereich 14 ein Volumenhologramm 16 angeordnet ist. Jedes dieser Volumenhologramme 16 umfasst zumindest teilweise eine jeweilige Optik 28 einer jeweiligen Kameravorrichtung 26, wobei die jeweilige Optik 28 derart ausgebildet ist, dass sie Licht im jeweiligen Teilbereich 14 der Scheibe 12 erfasst und jeweils zu einem Bildsensor 24 leitet. Dabei sind vier der Bildsensoren 24 an einer schmalen Seite der Scheibe 12 angeordnet und der fünfte Bildsensor 24 ist an einer Oberfläche der Stirnseite der Scheibe 12 angeordnet. Bei der gezeigten Ausführungsform sind fünf unterschiedliche Aufnahmeperspektiven eines Bildmotivs möglich.

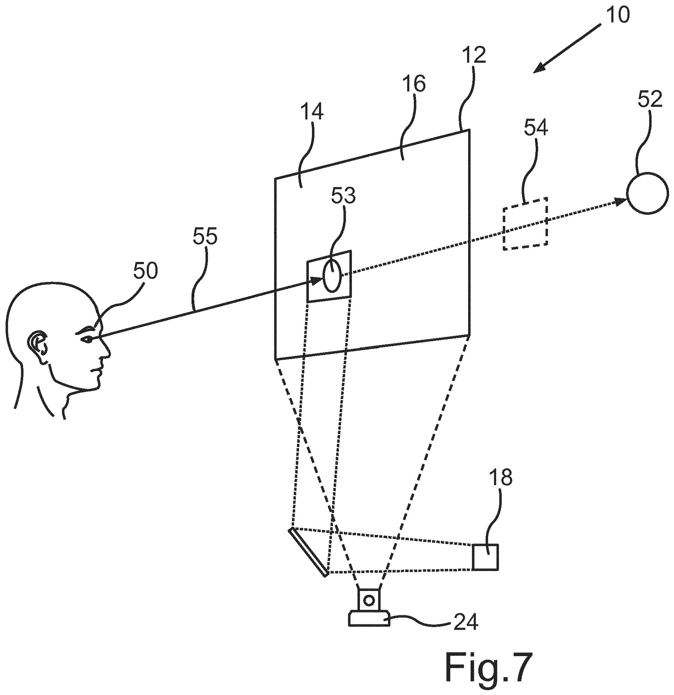

Fig. 7 zeigt nochmals die erste Ausführungsform der Anzeigevorrichtung 10 in einer seitlichen Perspektivansicht. Hier befindet sich ein Betrachter 50 auf einer ersten Seite der Scheibe 12 und peilt ein Objekt 52 auf der ihm gegenüberliegenden zweiten Seite der Scheibe 12 an. Der Teilbereich 14 der Scheibe ist so ausgebildet, dass wenigstens ein erstes Erfassungsbild auf der ersten Seite der Scheibe 12 erfasst wird und dass wenigstens ein zweites Erfassungsbild auf der dem Betrachter 50 gegenüberliegenden beziehungsweise der ersten Seite abgewandten zweiten Seite der Scheibe 12 erfasst wird. In vollständig hergestelltem Zustand des Fahrzeugs ist beispielsweise die erste Seite dem Innenraum des Fahrzeugs zugewandt, sodass die zweite Seite dem Innenraum abgewandt ist.

Durch das Erfassen einer Position der Augen des Betrachters 50, insbesondere mittels des ersten Erfassungsbilds, sowie durch das Erfassen des Objekts 52, insbesondere mittels des zweiten Erfassungsbilds, kann beispielsweise durch eine elektronische Recheneinrichtung ein Schnittpunkt 53 zwischen einem Sichtstrahl 55 und der Scheibe 12 errechnet werden. Dieser Schnittpunkt 53 dient einer Positionierung einer Anzeige von Inhalten beispielsweise einer erweiterten Realität, einer sogenannten "Augmented Reality". Diese Inhalte können mittels der Lichtquelle 18 in die Scheibe 12 eingespeist und im Teilbereich 14 über die bilderzeugenden Ebene des Volumenhologramms 16 ausgegeben werden. Dadurch entsteht für den Betrachter 50 ein virtuelles Bild 54, welches in einer von dem Betrachter außerhalb der Scheibe 12 wahrnehmbaren Bildebene zu liegen scheint. Ein Bild kann jedoch auch auf der Seite des Betrachters 50 dargestellt werden. Es lassen sich mehrere unterschiedliche Bildebenen realisieren.

Aufgenommene Bilder werden durch die elektronische Recheneinrichtung verarbeitet. Bei dieser sogenannten Bildverarbeitung können beispielsweise vordere und hintere Lichtstrahlen, das heißt Licht, welches an einer jeweiligen Seite der Scheibe 12 aufgenommen wurde, separiert und zwei getrennte Bilder generiert werden. Aus diesen jeweiligen Bildern können entweder direkt Tiefeninformationen, beispielsweise durch Lichtfelder, oder durch nachträgliche Berechnung, beispielsweise mittels Stereoverfahren, gewonnen werden. Die dadurch generierten Daten liefern wiederum die Grundlage für weitere Berechnungen, etwa eine Bestimmung des Sichtstrahls 55 vom Betrachter 50 zu dem Objekt 52. Der Schnittpunkt 53 dieses Sichtstrahls 55 mit dem optischen Medium, das heißt der Scheibe 12, kann genutzt werden, um wie gezeigt Inhalte anzuzeigen, beispielsweise etwa um einen Rahmen wie im Bild 54 um das Objekt zu legen. Ferner ist durch die Möglichkeit Bilder auf beiden Seiten der Scheibe 12 gleichzeitig zu erfassen die Möglichkeit gegeben, dass bereits bei der Bildaufnahme eine fixe Beziehung zwischen Bildelementen auf beiden Seiten besteht, beispielsweise durch einen Vektor durch den jeweiligen Erfassungspunkt der jeweiligen Bildpunkte 46, 48 auf der Erfassungsebene. Dadurch können wichtige Rückschlüsse für eine nachträgliche Bildbearbeitung, beispielsweise eine Trennung der sich überlagernden Bilder und/oder einer Bildanalyse beispielsweise die Erkennung von Objekten gezogen werden.

Einen Einfluss auf die Transparenz der Scheibe 12 haben die, insbesondere vorgebbaren Wellenlänge beziehungsweise Wellenlängenbereiche, welche durch die Scheibe transmittiert werden. Daher kann es vorteilhaft sein, dass, wenn beispielsweise nur eine Überwachung der Pupillen zum Erkennen der Blickrichtung erfasst werden soll, Licht im Infrarotwellenlängenbereich dazu verwendet wird, sodass eine Transparenz der Scheibe 12 im sichtbaren Licht nicht verändert wird.

Insgesamt zeigen die Beispiele der unterschiedlichen Ausführungsformen, wie durch die Erfindung eine dreidimensionale Bilderfassung mittels der wenigstens eine Kameravorrichtung 26 umfassenden Anzeigevorrichtung 10 realisiert wird, wobei anstelle eines herkömmlichen Objektivs wenigstens eine Optik 28 aus wenigstens einem Volumenhologramm 16 ausgebildet ist. Dabei ist das Volumenhologramm 16 innerhalb des Teilbereichs 14 der Scheibe 12 ausgebildet. Der holographische Wellenleiter beziehungsweise das Volumenhologramm 16 ermöglicht, neben einem außerhalb des Sichtbereichs platzierbaren Bildsensors 24 die Aufnahme unterschiedlicher Perspektiven. Darüber hinaus kann eine Veränderung des erfassten Bildmotivs durch insbesondere die optischen Elemente 34, 42, 44, beispielsweise durch Skalieren, Beugen und/oder Reflektieren derart erfolgen, dass eine elektronische Nachbearbeitung verringert werden kann.

Die Bildausgabe des Anzeigebilds und die Bildaufnahme des Erfassungsbilds können über jeweils unterschiedliche Lichtspektren und/oder über mehrere Volumenhologramme 16, welche nebeneinander und/oder hintereinander, das heißt gestapelt, angeordnet sind, realisiert werden. Dadurch lassen sich auch diverse Effekte etwa zur Darstellung unterschiedlicher Brennweiten oder virtueller Bildebenen nutzen. Ferner können die jeweiligen Fokusse der jeweiligen Optiken 28 derart ausgebildet sein, dass der jeweilige Teilbereich 14 einer Erfassung in einer anderen Fokusebene entspricht. Ferner können, mittels der unterschiedlichen optischen Elemente 34, 42, 44 und der Verwendung von Bildstabilisatoren, eine Bildebene, ein Bildformate und/oder die Auflösungen verändert werden. Dadurch kann die Anzeigevorrichtung 10 als eine Art Spiegelkreisel verwendet werden, dessen Einzelbilder aus unterschiedlichen Perspektiven zu einem vollständigen Bild führen.

Wird ein extremes Verhältnis von Bauhöhe zur Querschnitt der Scheibe 12 gewählt, kann eine extreme lichtstarke Optik 28 auf kleinsten Raum verwirklicht werden. Erstreckt sich beispielsweise der Teilbereich 14 über die gesamte Oberfläche der Scheibe 12, kann die gesamte Oberfläche als Objektivöffnung verwendet werden. Dadurch kann eine besonders effiziente Gewichtsreduzierung und dadurch auch eine Kostenreduzierung stattfinden, wobei ein Einsatz der Anzeigevorrichtung 10 auch in Bereichen etwa der Luft-und Raumfahrtindustrie in Frage kommt.

Darüber hinaus kann bei einem Verhältnis "große Scheibe 12 - kleiner Bildsensor 24", ein kleiner Bildsensor 24 so betrieben, dass er die Vorteile eines größerer Bildsensoren bereitstellen kann, wie beispielsweise eine höhere Lichtaufnahme, eine Tiefenunschärfe und/oder eine große Stereobreite. Dadurch ist es möglich, auch kompakte und lichtschwache Bildsensoren, beispielsweise eines Smartphones in kritischen Bereichen einsetzen zu können.

Ferner muss der Bildsensor 24 nicht mehr an der gewünschten Aufnahmeposition verbaut werden, wodurch besonders flexible Systeme realisiert werden können oder Bilder an Orten gemacht werden können, wo widrige Umweltbedingungen herrschen, beispielsweise in einem Motor und/oder in einem Ofen.

Weitere Einsatzbereiche der Erfindung können sein:
Die optischen Elemente 34, 42, 44 können beispielsweise als Hochpass- und/oder Tiefpassfilter und/oder für eine Farbverschiebung eingesetzt werden. Die Scheibe 12 kann beispielsweise beschichtet werden, wodurch diese als Spiegel und/oder Monitor verwendet werden kann, auch kann eine Beschichtung nicht spiegeln aber opaque sein und sich an- oder abschalten lassen. Durch eine Kombination auskoppelnder und einkoppelnder Wellenleiter könnten so genannte "structured Light-Anwendungen" geschaffen werden, in denen die gesamte Scheibe 12 als Aus-und Eingabemedium dient, wodurch sich ähnlich einem sogenannten "Area-Light" abgeschattete Bereiche verringern ließen. Darüber hinaus können Störbilder in einem für das menschliche Auge nicht sichtbaren Wellenlängenbereich erzeugt werden, um etwa einen Insassenschutz zu gewährleisten und/oder um Tiere, wie beispielsweise Vögel, vor der Scheibe 12 zu warnen. Ferner kann die Scheibe 12, insbesondere mittels unterschiedlicher Fokusebenen jeweiliger Volumenhologramme 16, als Flachbettscanner genutzt werden. Auch kann eine Bilderfassung, beispielsweise in der Seitenscheibe des Fahrzeugs, für die Erkennung biometrischer Merkmale genutzt werden.

## Patentansprüche

1. Anzeigevorrichtung (10), mit wenigstens einer Scheibe (12), mit wenigstens einem zumindest innerhalb eines transparenten Teilbereichs (14) der Scheibe (12) angeordneten Volumenhologramm (16), mit wenigstens einer, zumindest einen lichtempfindlichen Bildsensor (24) aufweisenden, Kameravorrichtung (26), und mit wenigstens einer Lichtquelle (18), mittels welcher in das Volumenhologramm (16) Licht (20) einkoppelbar ist, aus welchem mittels des Volumenhologramms (16) wenigstens ein für einen menschlichen Betrachter räumlich erscheinendes Bild (22, 54) erzeugbar ist, wobei das Volumenhologramm optische Elemente (34) aufweist, so dass ein Lichtstrahl (41), welcher in die Scheibe (12) einfällt, und dabei auf eines der optischen Elemente (34) trifft, innerhalb des Volumenhologramms (16) derart geführt wird, dass er auf ein weiteres der optischen Elemente (34) trifft, an welchem der Lichtstrahl aus der Scheibe (12) ausgekoppelt und auf den zumindest einen lichtempfindlichen Bildsensor (24) gelenkt wird, **dadurch gekennzeichnet, dass**
die Optik (28) der Kameravorrichtung (26), über welche mittels des Bildsensors (24) Bilder erfassbar sind, zumindest teilweise durch den Teilbereich (14) gebildet ist, wobei die Scheibe (12) auf einer dem Bildsensor (24) gegenüberliegenden Seite (39) mit einer in Überlappung mit dem Bildsensor (24) angeordneten Reflexionsschicht (40) versehen ist und wobei der Teilbereich (14) die gesamte Optik (28) der Kameravorrichtung (26) bildet.

2. Anzeigevorrichtung (10) nach Anspruch 1,
**dadurch gekennzeichnet, dass**
das Volumenhologramm (16) optische Elemente (34, 42, 44) aufweist, mittels welchen Licht, welches an wenigstens einer ersten Stelle (36) in die Scheibe (12) einfällt, zu wenigstens einer von der ersten Stelle (36) unterschiedlichen zweiten Stelle (38) zu leiten ist, an welcher das Licht aus der Scheibe (12) auskoppelbar ist.

3. Anzeigevorrichtung (10) nach Anspruch 2,
**dadurch gekennzeichnet, dass**
das von der Lichtquelle (18) bereitgestellte Licht (20) an der ersten Stelle (36) in die Scheibe (12) einkoppelbar ist.

4. Anzeigevorrichtung (10) nach Anspruch 2 oder 3,
**dadurch gekennzeichnet, dass**
das an der zweiten Stelle (38) aus der Scheibe (12) ausgekoppelte Licht mittels des Bildsensors (24) erfassbar ist.

5. Anzeigevorrichtung (10) nach einem der vorhergehenden Ansprüche,
**dadurch gekennzeichnet, dass**
der Bildsensor (24) direkt an der Scheibe (12) angeordnet ist und diese direkt berührt.

6. Anzeigevorrichtung (10) nach einem der vorhergehenden Ansprüche,
**dadurch gekennzeichnet, dass**
das Volumenhologramm (16) durch wenigstens eine innerhalb der Scheibe (12) angeordnete Folie gebildet ist.

7. Anzeigevorrichtung (10) nach einem der vorhergehenden Ansprüche,
**dadurch gekennzeichnet, dass**
die Scheibe (12) als Seitenscheibe oder Windschutzscheibe eines Fahrzeugs ausgebildet ist.

8. Anzeigevorrichtung (10) nach einem der vorhergehenden Ansprüche,
**dadurch gekennzeichnet, dass**
das Bild (22, 54) von dem Betrachter (50) in wenigstens einer vor und/oder hinter der Scheibe angeordneten Bildebene optisch wahrnehmbar ist.

9. Anzeigevorrichtung (10) nach einem der vorhergehenden Ansprüche,
**dadurch gekennzeichnet, dass**
der Teilbereich (14) zumindest teilweise mit einer opaque schaltbaren Schicht versehen ist.

10. Fahrzeug, mit wenigstens einer Anzeigevorrichtung nach einem der vorhergehenden Ansprüche.

## Claims

1. Display device (10) comprising at least one pane (12), at least one volume hologram (16) arranged at least within a transparent portion (14) of the pane (12), at least one camera device (26) having at least one light-sensitive image sensor (24), and at least one light source (18), by means of which light (20) can be coupled into the volume hologram (16), from which by means of the volume hologram (16) at least one image (22, 54) appearing three-dimensional to a human observer can be generated, wherein the volume hologram includes optical elements (34), so that a light beam (41) incident on the pane (12) and thereby contacting one of the optical elements (34) is guided within the volume hologram (16) such that it contacts a further optical element (34), at which the light beam is coupled out of the pane (12) and is directed to the at least one light-sensitive image sensor (24),
**characterised in that**
the optics (28) of the camera device (26), via which images can be detected by means of the image sensor (24), are formed at least partly by the portion (14), wherein the pane (12) is provided on a side (39) opposite the image sensor (24) with a reflective layer (40) overlapping the image sensor (24) and wherein the portion (14) forms the entire optics (28) of the camera device (26).

2. Display device (10) according to claim 1,
**characterised in that**
the volume hologram (16) has optical elements (34, 42, 44) by means of which light incident on at least one first point (36) of the pane (12) is to be directed to at least one second point (38), different from the first point (36), at which second point the light can be coupled out of the pane (12).

3. Display device (10) according to claim 2,
**characterised in that**
the light (20) provided by the light source (18) is coupled into the pane (12) at the first point (36).

4. Display device (10) according to claim 2 or 3,
**characterised in that**
the light coupled out of the pane (12) at the second point (38) can be detected by means of the image sensor (24).

5. Display device (10) according to any of the preceding claims,
**characterised in that**
the image sensor (24) is arranged directly on the pane (12) and contacts the latter directly.

6. Display device (10) according to any of the preceding claims,
**characterised in that**
the volume hologram (16) is formed by at least one film arranged inside the pane (12).

7. Display device (10) according to any of the preceding claims,
**characterised in that**
the pane (12) is designed as a side window or windscreen of a vehicle.

8. Display device (10) according to any of the preceding claims,
**characterised in that**
the image (22, 54) is optically perceptible by the observer (50) in at least one image plane arranged in front of and/or behind the pane.

9. Display device (10) according to any of the preceding claims,
**characterised in that**
the portion (14) is provided at least partially with an opaque switchable layer.

10. Vehicle comprising at least one display device according to any of the preceding claims.

## Revendications

1. Dispositif d'affichage (10), avec au moins une vitre (12), avec au moins un hologramme de volume (16) disposé au moins à l'intérieur d'une zone partielle transparente (14) de la vitre (12), avec au moins un dispositif de caméra (26) présentant au moins un capteur d'image photosensible (24), et avec au moins une source de lumière (18), au moyen de laquelle de la lumière (20) peut être couplée dans l'hologramme de volume (16), à partir de laquelle au moins une image (22, 54) apparaissant spatialement pour un observateur humain peut être générée au moyen de l'hologramme de volume (16), dans lequel l'hologramme de volume présente des éléments optiques (34), de sorte qu'un faisceau lumineux (41), qui entre dans la vitre (12) et frappe alors un des éléments optiques (34), soit guidé à l'intérieur de l'hologramme de volume (16) de sorte qu'il frappe un autre des éléments optiques (34) sur lequel le faisceau lumineux est couplé hors de la vitre (12) et dirigé sur l'au moins un capteur d'image photosensible (24),
**caractérisé en ce**
**que** l'optique (28) du dispositif de caméra (26), par l'intermédiaire de laquelle des images sont détectables au moyen du capteur d'image (24), est au moins partiellement formée par la zone partielle (14), dans laquelle la vitre (12) est dotée, sur un côté opposé (39) au capteur d'image (24), d'une couche réfléchissante (40) disposée en chevauchement avec le capteur d'image (24) et dans lequel la zone partielle (14) forme l'ensemble de l'optique (28) du dispositif de caméra (26).

2. Dispositif d'affichage (10) selon la revendication 1,
**caractérisé en ce**
**que** l'hologramme de volume (16) présente des éléments optiques (34, 42, 44) au moyen desquels de la lumière, qui entre à au moins un premier emplacement (36) dans la vitre (12), doit être guidée vers au moins un second emplacement (38) qui est différent du premier emplacement (36) et auquel la lumière peut être couplée hors de la vitre (12).

3. Dispositif d'affichage (10) selon la revendication 2,
caractérisé en ce
la lumière (20) fournie par la source de lumière (18) peut être couplée dans la vitre (12) au premier emplacement (36).

4. Dispositif d'affichage (10) selon la revendication 2 ou 3,
**caractérisé en ce**
**que** la lumière couplée hors de la vitre (12) au second emplacement (38) est détectable au moyen du capteur d'image (24).

5. Dispositif d'affichage (10) selon l'une quelconque des revendications précédentes,
**caractérisé en ce**
**que** le capteur d'image (24) est disposé directement sur la vitre (12) et est en contact direct avec celle-ci.

6. Dispositif d'affichage (10) selon l'une quelconque des revendications précédentes,
**caractérisé en ce**
**que** l'hologramme de volume (16) est formé par au moins un film disposé à l'intérieur de la vitre (12).

7. Dispositif d'affichage (10) selon l'une quelconque des revendications précédentes,
**caractérisé en ce**
**que** la vitre (12) est formée en tant que vitre latérale ou pare-brise d'un véhicule.

8. Dispositif d'affichage (10) selon l'une quelconque des revendications précédentes,
**caractérisé en ce**
**que** l'image (22, 54) est optiquement perceptible par l'observateur (50) dans au moins un plan image disposé devant et/ou derrière la vitre.

9. Dispositif d'affichage (10) selon l'une quelconque des revendications précédentes,
**caractérisé en ce**
**que** la zone partielle (14) est au moins partiellement dotée d'une couche commutable opaque.

10. Véhicule, avec au moins un dispositif d'affichage selon l'une quelconque des revendications précédentes.
